# EUROPEAN PATENT APPLICATION

(11) **EP 4 250 001 A1**
(43) Date of publication of application: **27.09.2023**
(21) Application number: 21894581.4
(22) Date of filing: 15.11.2021
(51) Int. Cl.: G02F 1/37, H01S 3/067, H01S 3/10

(54) **LIGHT AMPLIFICATION DEVICE AND LIGHT AMPLIFICATION METHOD**

(30) Priority: 18.11.2020 JP 2020191940
(71) Applicant: NIKON CORPORATION, Minato-ku Tokyo 108-6290 (JP)
(72) Inventor: TOKUHISA Akira, Tokyo 108-6290 (JP)
(74) Representative: Viering, Jentschura & Partner mbB Patent- und Rechtsanwälte
(86) International application number: PCT/JP2021/041840
(87) International publication number: WO 2022/107707

(57) **Abstract**

A light amplification apparatus includes: an optical fiber amplification unit that amplifies two pulse laser light having at least a first wavelength λ₁ and a second wavelength λ₂ that are different from each other while propagating the two pulse laser light with a time difference and outputs first amplified light and second amplified light that are amplified light of the pulse laser light; and an optical distance adjustment unit that differentiates optical distances at which the first amplified light and the second amplified light that are emitted from the optical fiber amplification unit propagate and superimposes the first amplified light and the second amplified light on each other.

## Description

### TECHNICAL FIELD

The present invention relates to a light amplification apparatus and a light amplification method.

Priority is claimed on Japanese Patent Application No. 2020-191940, filed on November 18, 2020, the contents of which are incorporated herein by reference.

### BACKGROUND

In the related art, a pulse laser system is known which amplifies time-resolved pulse light and then performs recombination (for example, refer to Patent Document 1). However, a plurality of pulse light having different wavelengths are not amplified to pulse light each having a high peak energy.

### [Related Art Documents]

### [Patent Documents]

[Patent Document 1]
Published Japanese Translation No. 2014-522097 of the PCT International Publication

### SUMMARY OF INVENTION

A light amplification apparatus according to a first aspect includes: an optical fiber amplification unit that amplifies two pulse laser light having at least a first wavelength λ₁ and a second wavelength λ₂ that are different from each other while propagating the two pulse laser light with a time difference and outputs first amplified light and second amplified light that are amplified light of the pulse laser light; and an optical distance adjustment unit that differentiates optical distances at which the first amplified light and the second amplified light that are emitted from the optical fiber amplification unit propagate and superimposes the first amplified light and the second amplified light on each other.

A light amplification method according to a second aspect includes: amplifying two pulse laser light having at least a first wavelength λ₁ and a second wavelength λ₂ that are different from each other while propagating the two pulse laser light with a time difference and outputting first amplified light and second amplified light that are amplified light of each of the pulse laser light; and differentiating optical distances at which the first amplified light and the second amplified light propagate and superimposing the first amplified light and the second amplified light on each other.

### BRIEF DESCRIPTION OF THE DRAWINGS

FIG. 1 is a block diagram schematically showing a main part configuration of a light amplification apparatus of a first embodiment.
FIG. 2A is a view schematically showing a relationship between time and first pulse laser light and second pulse laser light.
FIG. 2B is a view schematically showing a relationship between time and first pulse laser light and second pulse laser light.
FIG. 3A is a block diagram schematically showing a main part configuration of a light amplification apparatus of Example 1.
FIG. 3B is a block diagram schematically showing a main part configuration of the light amplification apparatus of Example 1.
FIG. 4 is a block diagram schematically showing a main part configuration of a light amplification apparatus of Example 2.
FIG. 5 is a block diagram schematically showing a main part configuration of a light amplification apparatus of Example 3.
FIG. 6A is a block diagram schematically showing a main part configuration of a light amplification apparatus of Example 4.
FIG. 6B is a block diagram schematically showing a main part configuration of the light amplification apparatus of Example 4.
FIG. 7 is a block diagram schematically showing a main part configuration of a light amplification apparatus of a second embodiment.
FIG. 8 is a block diagram schematically showing a main part configuration of a light amplification apparatus of Example 5.
FIG. 9 is a block diagram schematically showing a main part configuration of a light amplification apparatus of Example 6.

### DESCRIPTION OF THE EMBODIMENTS

A light amplification apparatus according to an embodiment of the present invention includes: an optical fiber amplification unit for amplifying two pulse laser light having at least a first wavelength λ₁ and a second wavelength λ₂ that are different from each other; and an optical distance adjustment unit that superimposes the first amplified light on the second amplified light that are the amplified pulse laser light. In the optical fiber amplification unit, the two pulse laser light are propagated with a time difference, amplified, and output. The optical distance adjustment unit has a configuration that differentiates optical distances at which the first amplified light and the second amplified light that are emitted from the optical fiber amplification unit propagate. Thereby, when a plurality of pulse laser light having different wavelengths are amplified simultaneously by a single optical fiber amplification unit, it is possible to avoid the disturbance of spectrum and the generation of an unnecessary spectral component due to a non-linear optical process (FWM: Four-Wave Mixing, XPM: Cross-Phase Modulation, SRS: Stimulated Raman Scattering, or the like) that occurs in the optical fiber amplification unit. The two pulse laser light amplified with a time difference are superimposed by the optical distance adjustment unit and can be thereby output in a state where the disturbance of spectrum and the generation of an unnecessary spectral component are prevented. Hereinafter, details are described.

### <First embodiment>

A light amplification apparatus according to a first embodiment will be described with reference to the drawings. The present embodiment is specifically described for the purpose of understanding the scope of the invention and does not limit the invention unless otherwise specified.

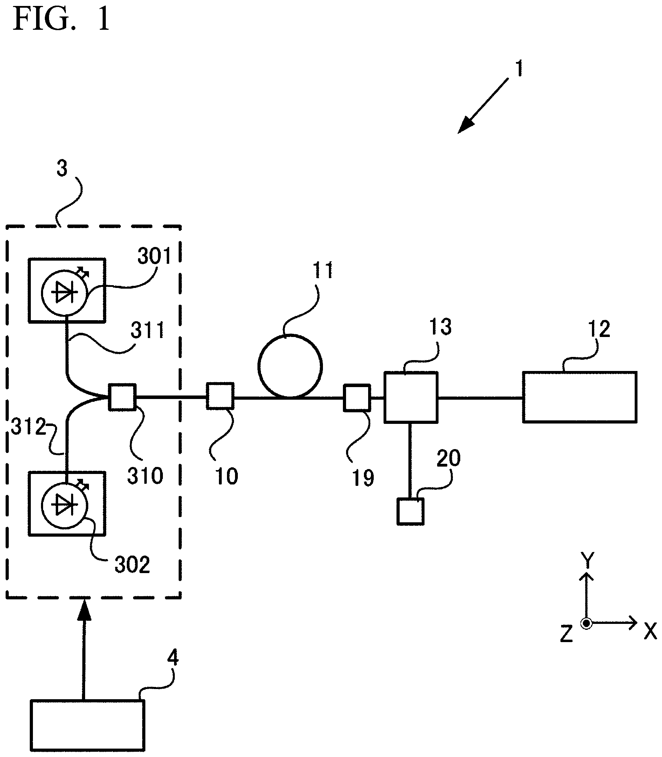

FIG. 1 is a block diagram schematically showing an example of a main part configuration of a light amplification apparatus 1. For the purpose of explanation, an orthogonal coordinate system consisting of an X-axis, a Y-axis, and a Z-axis is set as shown in FIG. 1. FIG. 1 shows the case where the X-axis is set along a propagation direction of pulse laser light, the Y-axis is set to be perpendicular to the X-axis and toward an upward direction in the paper plane, and the Z-axis is set to be perpendicular to the X-axis and the Y-axis and toward a front side of the paper plane.

The light amplification apparatus 1 includes an optical fiber amplification unit 11, an optical distance adjustment unit 12, and a deflection element 13. An incident unit 10 is connected to a light source 3. The light source 3 includes a first light source 301 and a second light source 302. Each of the first light source 301 and the second light source 302 is controlled by a control unit 4 and outputs pulse laser light.

The first light source 301 outputs first pulse laser light having a first wavelength λ₁ to an optical path 311. The second light source 302 outputs second pulse laser light having a second wavelength λ₂ that is different from the first wavelength λ₁ to an optical path 312. The first light source 301 and the second light source 302 have a variety of circuits for supplying electric power. For example, a semiconducting laser (laser diode) can be used for each of the first light source 301 and the second light source 302. The first pulse laser light and the second pulse laser light are controlled by the control unit 4 described later and are output with a time difference τ. The time difference τ is larger than a pulse width of the first pulse laser light from the first light source 301 and a pulse width of the second pulse laser light from the second light source 302. The first pulse laser light and the second pulse laser light propagate through the same optical path by a wave mixer 310 and enter the incident unit 10.

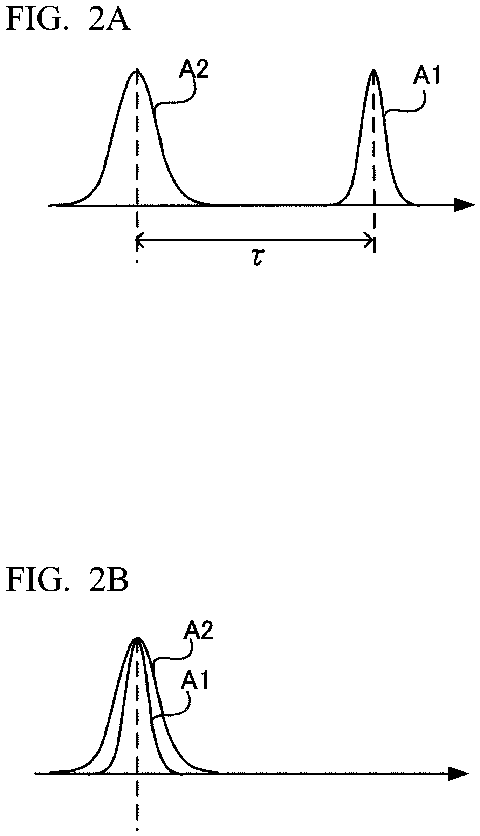

The following embodiment is described using an example in which the first wavelength λ₁ is shorter than the second wavelength λ₂, and the first pulse laser light is output after a time has elapsed since the second pulse laser light is output. FIG. 2A and FIG. 2B schematically show a relationship between time and the first pulse laser light and the second pulse laser light. FIG. 2A shows that the horizontal axis represents time and that a time difference between a peak of first pulse laser light A1 and a peak of second pulse laser light A2 is τ. The first pulse laser light and the second pulse laser light that are output from the light source 3 propagate in the state shown in FIG. 2A.

Further, a polarization plate can be arranged between the incident unit 10 and the wave mixer 310 of the light source 3 of FIG. 1, and the first pulse laser light and the second pulse laser light can be linearly polarized. The polarization plate is arranged such that both electric field oscillation directions of the first pulse laser light and the second pulse laser light that are combined by the wave mixer 310 become a direction along the paper plane of the drawing.

The optical fiber amplification unit 11 is a fiber doped with a rare-earth element and is, for example, a known single-mode fiber that excites a rare-earth element by a core excitation method or a known double-clad fiber that excites a rare-earth element by a clad excitation method. For example, ytterbium (Yb), erbium (Er), praseodymium (Pr), neodymium (Nd), or thulium (Tm) can be used as the rare-earth element. For example, as the optical fiber amplification unit 11, a fiber doped with ytterbium may be used, a fiber doped with erbium may be used, or a fiber co-doped with erbium and ytterbium may be used.

The rare-earth element becomes an excited state in the optical fiber amplification unit 11 by excitation light output from an excitation light source (not shown) for exciting the optical fiber amplification unit 11. In this state, the first pulse laser light and the second pulse laser light are incident into the optical fiber amplification unit 11 with the time difference τ described above. The optical fiber amplification unit 11 amplifies the incident first pulse laser light and outputs the first amplified light from the emission unit 19. The optical fiber amplification unit 11 amplifies the incident second pulse laser light and outputs the second amplified light from the emission unit 19. The first pulse laser light and the second pulse laser light propagate through the optical fiber amplification unit 11 with the time difference τ. As described above, since the time difference τ is larger than the pulse widths of the first pulse laser light from the first light source 301 and the second pulse laser light from the second light source 302, no non-linear interaction occurs between the first pulse laser light and the second pulse laser light that are propagating through the optical fiber amplification unit 11. In other words, the first pulse laser light and the second pulse laser light propagate through the optical fiber amplification unit 11 with a sufficient time difference such that a non-linear interaction between the first pulse laser light and the second pulse laser light does not occur. The first amplified light and the second amplified light are also output from the optical fiber amplification unit 11 with the time difference τ described above. Accordingly, the first amplified light and the second amplified light that are output from the optical fiber amplification unit 11 have the relationship shown in FIG. 2A.

The optical distance adjustment unit 12 is constituted so as to differentiate optical distances at which the first amplified light and the second amplified light that are emitted from the optical fiber amplification unit 11 propagate from each other. The optical distance adjustment unit 12 superimposes the first amplified light and the second amplified light that have propagated at a different optical distance. The optical distance adjustment unit 12 is constituted of, for example, a plurality of reflection members or a plurality of diffraction gratings and a reflection member.

When the optical distance adjustment unit 12 is constituted of a plurality of reflection members, as described later in detail, by arranging a reflection portion (first reflection portion) that reflects the first amplified light and a reflection portion (second reflection portion) that reflects the second amplified light at positions having a different distance from each other from an emission position of the optical fiber amplification unit 11, different optical distances are constituted. When a time difference generated when each of the first amplified light and the second amplified light propagates becomes the time difference τ described above due to an optical distance difference generated by the arrangement of the first reflection portion and the second reflection portion, the first amplified light and the second amplified light that are emitted from the optical distance adjustment unit 12 are completely superimposed with each other. FIG. 2B shows that the horizontal axis represents time and a state where the first amplified light and the second amplified light are completely superimposed, that is, the case where a time difference between a peak of the first pulse laser light A1 and a peak of the second pulse laser light A2 is zero.

When the optical distance adjustment unit 12 is constituted of the plurality of diffraction gratings and the reflection member, as described later in detail, the first amplified light and the second amplified light propagate through a different optical path via the diffraction grating and are reflected by the reflection member. The first amplified light and the second amplified light that are reflected by the reflection member again are emitted from the optical distance adjustment unit 12 again via the diffraction grating. When a time difference generated when the first amplified light and the second amplified light propagate becomes the time difference τ due to an optical distance difference generated at the first amplified light and the second amplified light by passing through the diffraction grating, as shown in FIG. 2B, the first amplified light and the second amplified light that are emitted from the optical distance adjustment unit 12 are completely superimposed on each other.

The deflection element 13 is provided in the optical path between the optical fiber amplification unit 11 and the optical distance adjustment unit 12. The deflection element 13 is a branch optical element constituted of, for example, a polarization beam splitter (PBS) or an optical member having a transmission unit and a reflection unit. The deflection element 13 changes propagation directions of the first amplified light and the second amplified light from the optical distance adjustment unit 12. The first amplified light and the second amplified light of which the propagation direction is changed at the deflection element 13 are emitted from an output unit 20.

Depending on the arrangement relationship between the optical fiber amplification unit 11 and the optical distance adjustment unit 12, the light amplification apparatus 1 can have a configuration that does not include the deflection element 13.

The control unit 4 is a processor that has a microprocessor, peripheral circuitry, and the like and controls each portion of the light amplification apparatus 1 by reading and executing a control program stored in a storage medium (for example, a flash memory or the like, not shown) in advance. The control unit 4 may be constituted of a CPU, an ASIC, a programmable MPU, or the like. The control unit 4 controls the degree of superposition between the first amplified light and the second amplified light that are emitted from the optical distance adjustment unit 12 by controlling the time difference when the first pulse laser light and the second pulse laser light are emitted from the first light source 301 and the second light source 302, respectively. When this time difference τ is controlled to be a time difference generated when the first amplified light and the second amplified light propagate with the optical distance difference in the optical distance adjustment unit 12, the first amplified light and the second amplified light that are emitted from the optical distance adjusting unit 12 are completely superimposed.

Hereinafter, specific examples of the light amplification apparatus 1 described above will be described.

### (Example 1)

A case is described in which as the light amplification apparatus 1, an optical distance adjustment unit 12-1 has a first reflection portion that reflects first amplified light and a second reflection portion that reflects second amplified light.

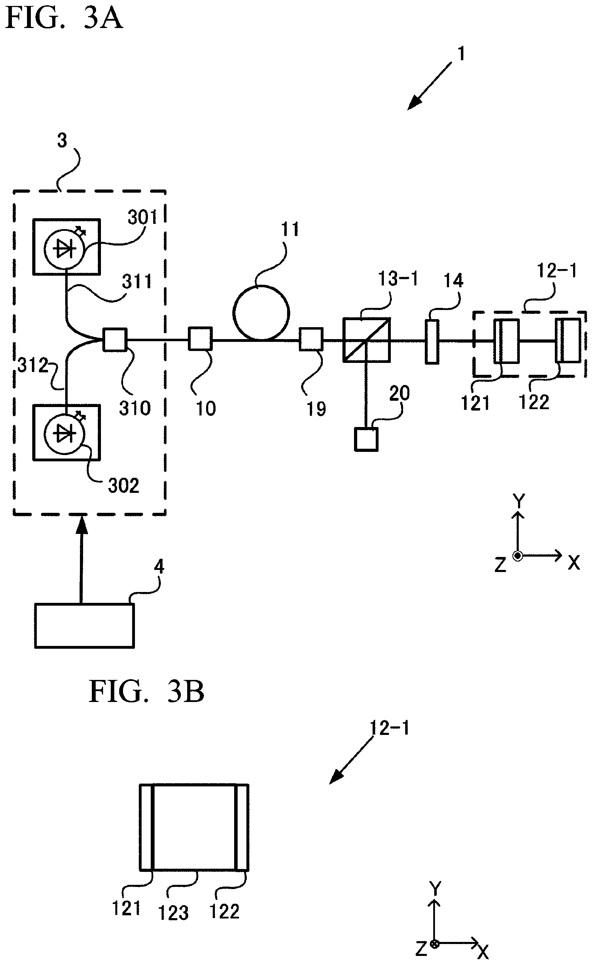

FIG. 3A is a block diagram schematically showing a main part configuration of a light amplification apparatus 1 in Example 1. The light amplification apparatus 1 includes an optical fiber amplification unit 11, an optical distance adjustment unit 12-1, a deflection element 13-1, a polarization state adjustment element 14, a light source 3, and a control unit 4. The optical fiber amplification unit 11, the light source 3, and the control unit 4 include configurations similar to those described with reference to FIG. 1. The light amplification apparatus 1 may not include the light source 3 and the control unit 4.

The deflection element 13-1 is a polarization beam splitter (PBS). The deflection element 13-1 reflects an S polarization component and transmits a P polarization component of the first amplified light and the second amplified light that are emitted from the optical fiber amplification unit 11. The first amplified light and the second amplified light of the P polarization that have transmitted through the deflection element 13-1 propagate along the X direction of the drawing. The polarization state adjustment element 14 is arranged between the optical fiber amplification unit 11 and the optical distance adjustment unit 12-1. Here, the case in which a 45-degree Faraday rotator is used as the polarization state adjustment element 14 is considered. Electric field oscillation directions (polarization directions) of the first amplified light and the second amplified light of the linear polarization (P polarization) that are emitted from the deflection element 13-1 are rotated by 45 degrees by the polarization state adjustment element 14. A quarter-wave plate other than the Faraday rotator can be used as the polarization state adjustment element 14.

The first amplified light and the second amplified light in which the electric field oscillation direction is rotated by 45° by the polarization state adjustment element 14 enters the optical distance adjustment unit 12-1. The optical distance adjustment unit 12-1 includes: a first reflection portion 121 that transmits the second amplified light having a second wavelength λ₁ and reflects the first amplified light having a first wavelength λ_{1;} and a second reflection portion 122 that reflects the second amplified light having the second wavelength λ₂. The first reflection portion 121 and the second reflection portion 122 are a narrow band reflection mirror in which a dielectric thin film is formed on a surface (a surface parallel to the YZ plane) of a base material having a light transmission property made of glass or the like as the material. A short-pass filter, a long-pass filter, and the like can be similarly used. A broadband mirror having a small wavelength-dependent property can also be used for the second reflection portion 122. As described above, the first reflection portion 121 and the second reflection portion 122 are arranged at positions having a different distance from the emission position of the optical fiber amplification unit 11. In the example shown in FIG. 3A, the first reflection portion 121 is arranged on a -X direction side further than the second reflection portion 122. When the emission timings of the first pulse laser light and the second pulse laser light are controlled by the control unit 4 such that the time in which the second amplified light reciprocates between the first reflection portion 121 and the second reflection portion 122 becomes a time difference τ between a time when the second pulse laser light is output from the light source 3 and a time when the first pulse laser light is emitted, the first amplified light and the second amplified light are emitted in the -X direction side from the optical distance adjustment unit 12-1 in a state of being completely superimposed on each other. That is, by controlling the time difference between the emission of the first pulse laser light from the first light source 301 and the emission of the second pulse laser light from the second light source 302 using the control unit 4, it is possible to control the degree of superposition between the first amplified light and the second amplified light.

As shown in FIG. 3B, the first reflection portion 121 and the second reflection portion 122 may be provided on a first surface (-X direction side) and a second surface (+X direction side), respectively, of a single light transmission member 123, for example, made of glass or the like as the material.

The first amplified light and the second amplified light that are emitted from the optical distance adjustment unit 12-1 propagate in the -X-axis direction and become S polarization by the electric field oscillation directions being rotated by 45° at the polarization state adjustment element 14. That is, the polarization state adjustment element 14 rotates the electric field oscillation direction by 90° in the reciprocation. The first amplified light and the second amplified light that become the S polarization are reflected by the deflection element 13-1, propagate in the -Y direction side, and are emitted from the output unit 20 to the outside of the light amplification apparatus 1.

### (Example 2)

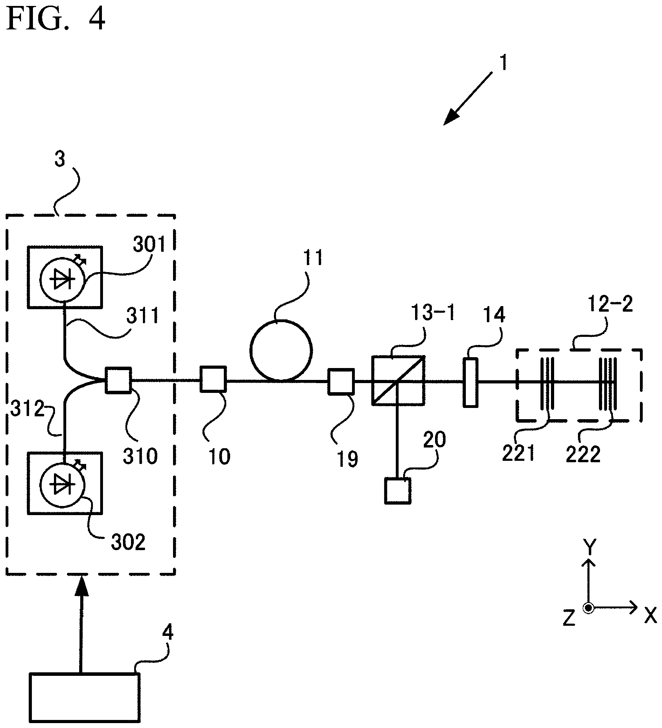

Next, a light amplification apparatus 1 of Example 2 will be described with reference to FIG. 4. In the light amplification apparatus 1 of Example 2, an optical distance adjustment unit 12-2 includes: a first reflection portion 221 that reflects the first amplified light and transmits the second amplified light; and a second reflection portion 222 that reflects the second amplified light. The light amplification apparatus 1 of Example 2 is identical to the light amplification apparatus 1 of Example 1 except that the configuration of the optical distance adjustment unit 12-2 is different from that of the optical distance adjustment unit 12-1 of Example 1.

The optical distance adjustment unit 12-2 is a volumetric holographic diffraction grating (VBG: Volume Bragg Grating) in which the first reflection portion 221 that reflects the first amplified light and transmits the second amplified light and the second reflection portion 222 that reflects the second amplified light are constituted of a grating. The first reflection portion 221 and the second reflection portion 222 are formed at positions having a different distance from the emission position of the optical fiber amplification unit 11 similarly to the first reflection portion 121 and second reflection portion 122 of Example 1. In the example shown in FIG. 4, the first reflection portion 221 is arranged on a -X direction side further than the second reflection portion 222. When the emission timings of the first pulse laser light and the second pulse laser light are controlled by the control unit 4 such that the time in which the second amplified light reciprocates between the first reflection portion 221 and the second reflection portion 222 becomes a time difference between a time when the second pulse laser light is output from the light source 3 and a time when the first pulse laser light is emitted, the first amplified light and the second amplified light are emitted in the -X direction side from the optical distance adjustment unit 12-2 in a state of being completely superimposed on each other. That is, in Example 2, by controlling the time difference between the emission of the first pulse laser light from the first light source 301 and the emission of the second pulse laser light from the second light source 302 using the control unit 4, it is possible to control the degree of superposition between the first amplified light and the second amplified light.

The optical distance adjustment unit 12-2 may be constituted of a CVBG (Chirped Volume Bragg Grating).

### (Example 3)

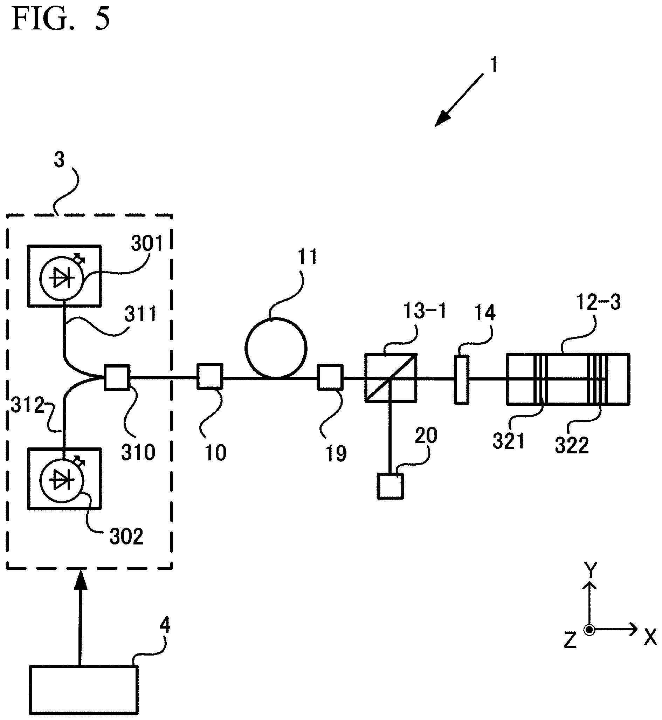

Next, a light amplification apparatus 1 of Example 3 will be described with reference to FIG. 5. In the light amplification apparatus 1 of Example 3, an optical distance adjustment unit 12-3 includes: a first reflection portion 321 that reflects the first amplified light and transmits the second amplified light; and a second reflection portion 322 that reflects the second amplified light. The light amplification apparatus 1 of Example 3 is identical to the light amplification apparatus 1 of Example 1 except that the configuration of the optical distance adjustment unit 12-3 is different from that of the optical distance adjustment unit 12-1 of Example 1.

The optical distance adjustment unit 12-3 is a fiber Bragg grating element (FBG: Fiber Bragg Grating) in which the first reflection portion 321 that reflects the first amplified light and transmits the second amplified light and the second reflection portion 322 that reflects the second amplified light are constituted of a grating engraved in an optical fiber. The first reflection portion 321 and the second reflection portion 322 are formed at positions having a different distance from the emission position of the optical fiber amplification unit 11. In the example shown in FIG. 5, the first reflection portion 321 is arranged on a -X direction side further than the second reflection portion 322. When the emission timings of the first pulse laser light and the second pulse laser light are controlled by the control unit 4 such that the time in which the second amplified light reciprocates between the first reflection portion 321 and the second reflection portion 322 becomes a time difference τ between a time when the second pulse laser light is output from the light source 3 and a time when the first pulse laser light is emitted, the first amplified light and the second amplified light are emitted in the -X direction side from the optical distance adjustment unit 12-3 in a state of being completely superimposed on each other. That is, in Example 3, by controlling the time difference between the emission of the first pulse laser light from the first light source 301 and the emission of the second pulse laser light from the second light source 302 using the control unit 4, it is possible to control the degree of superposition between the first amplified light and the second amplified light.

In Example 3, the optical distance adjustment unit 12-3 is constituted of a fiber. In the optical distance adjustment unit 12-3, the length of the fiber closer to the optical fiber amplification unit 11 than the first reflection portion 321 can be shortened, for example, to about 10 cm. In this way, since the length of the fiber in the optical distance adjustment unit 12-3 is short, the non-linear interaction between the first amplified light and the second amplified light in this portion is very small and negligible. In the example of Example 3, in the optical distance adjustment unit 12-3, an arrangement is possible in which the distance between the first reflection portion 321 and the second reflection portion 322 is increased, and thereby, the difference in the optical distance between the first amplified light and the second amplified light is relatively easily increased. For example, when the distance between the first reflection portion 321 and the second reflection portion 322 is 20 cm, the time difference τ corresponds to about 2 ns.

### (Example 4)

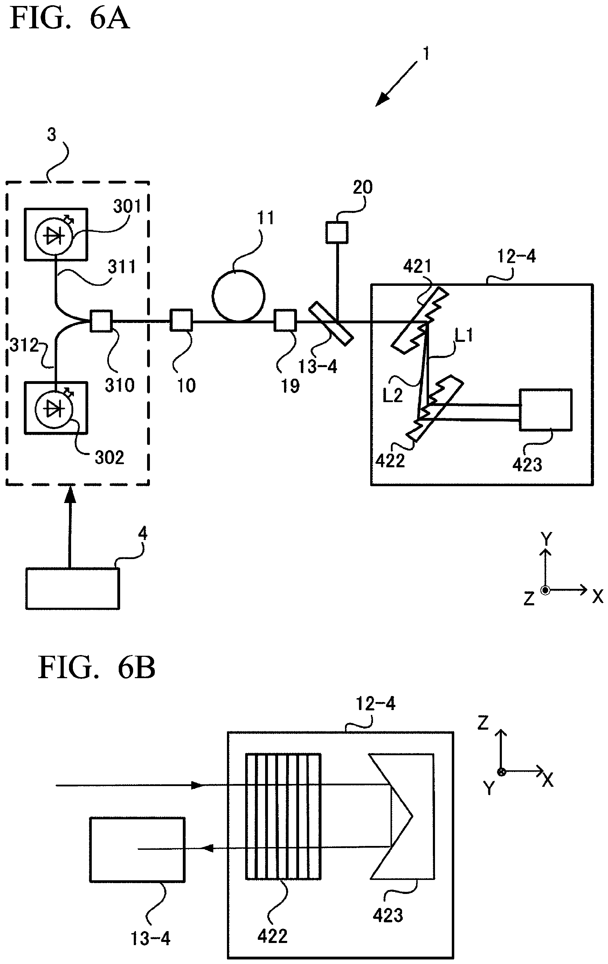

Next, a light amplification apparatus 1 of Example 4 will be described with reference to FIGS. 6A, 6B. In the light amplification apparatus 1 of Example 4, the polarization state adjustment element 14 is not arranged, and a deflection element 13-4 and an optical distance adjustment unit 12-4 are different from the deflection element 13-1 and the optical distance adjustment unit 12-1 of Example 1, respectively.

The deflection element 13-4 is a mirror having high reflectivity. In Example 4, as schematically shown in FIG. 6B, the first amplified light and the second amplified light from the optical fiber amplification unit 11 are arranged to pass through an upper portion (+Z direction side) of the deflection element 13-4, enter the optical distance adjustment unit 12-4, be shifted in the -Z direction side in the optical axis height, then be emitted from the optical distance adjustment unit 12-4, and be reflected by the deflection element 13-4. In FIG. 6B, an arrow indicated by a solid line shows a propagation route of the first amplified light and the second amplified light.

The optical distance adjustment unit 12-4 includes a grating pair having a first grating 421 and a second grating 422 and a reflection portion 423. The first grating 421 deflects the incident first amplified light and the incident second amplified light that have passed through the upper portion of the deflection element 13-4 to angles different from each other and emits the first amplified light and the second amplified light toward the second grating 422. The second grating 422 emits the first amplified light and the second amplified light deflected by the first grating 421 toward the reflection portion 423 such that the first amplified light and the second amplified light become parallel to each other. Since the second wavelength λ₂ is longer than the first wavelength λ₁ as described above, the second amplified light deflected by the first grating 421 propagates through an optical path L2 and then enters the second grating 422, and the first amplified light propagates through an optical path L1 and then enters the second grating 422. The first and second amplified light are deflected by the second grating 422, become parallel to each other, are incident on the reflection portion 423, are shifted in the -Z direction side in the height of the beam at the time of reflection (refer to FIG. 6B), then return through the propagation path, are aligned to the same optical path by the first grating 421, and are then emitted from the optical distance adjustment unit 12-4. Thereby, the optical distance at which the second amplified light propagates is longer than the optical distance at which the first amplified light propagates. Accordingly, the second amplified light requires more time to pass through the optical distance adjustment unit 12-4 than the first amplified light. When this time difference becomes the time difference τ at the time of emission from the light source 3, the first amplified light and the second amplified light are emitted from the optical distance adjustment unit 12-4 in a state of being completely superimposed on each other. That is, in Example 4, by controlling the time difference between the emission of the first pulse laser light from the first light source 301 and the emission of the second pulse laser light from the second light source 302 using the control unit 4, it is possible to control the degree of superposition between the first amplified light and the second amplified light.

For example, when a grating having a line density of 1600/mm is used at an incidence angle of 58° and a grating interval of 1 cm for amplified light having a wavelength of 1060 nm, a dispersion D2 is about 1.2 ps/nm. Accordingly, when the difference between the first wavelength λ₁ and the second wavelength λ₂ is 10 nm and the interval between the two gratings is 10 cm, a time difference of 120 ps can be generated between the first amplified light and the second amplified light. When the time difference between the emission of the first pulse laser light and the emission of the second pulse laser light is controlled to 120 ps by the control unit 4, the first amplified light and the second amplified light can be completely superimposed.

The reflection portion 423 is a roof mirror in which the incident light and the reflection light become parallel to each other and which reflects the first amplified light and the second amplified light that are parallel to each other while maintaining the parallel relationship. In Example 4, the reflection portion 423 can move (shift) the first amplified light and the second amplified light in a direction perpendicular to the dispersion direction of the grating (that is, the Z direction) with respect to the incident direction of the first amplified light and the second amplified light.

The first amplified light and the second amplified light that are emitted from the optical distance adjustment unit 12-4 propagate toward the deflection element 13-4. As described above, the first amplified light and the second amplified light that are reflected by the reflection portion 423 propagate on a further -Z direction side than when being emitted from the optical fiber amplification unit 11, enter the deflection element 13-4, and are reflected to the +Y direction side. Thereby, the first amplified light and the second amplified light are emitted from the output unit 20.

The first embodiment and the examples are described using an example in which two pulse laser light having different wavelengths are emitted from the light source 3; however, three or more pulse laser light may be emitted from the light source 3. For example, when three pulse laser light is emitted, the light source 3 further has a third light source that emits third pulse laser light having a third wavelength λ₃. The first, second, and third pulse laser light that are emitted from the light source 3 enter the optical fiber amplification unit 11 to propagate with a time difference and are amplified to the first amplified light, the second amplified light, and the third amplified light, respectively. By constituting the optical distance adjustment unit 12 such that the distance at which the third amplified light propagates is different from that of the first amplified light and the second amplified light, it is possible to superimpose the first amplified light, the second amplified light, and the third amplified light on one another. In this case, the optical distance adjustment unit 12 of Examples 1 to 3 includes a third reflection portion that reflects the third amplified light in addition to the first reflection portion and the second reflection portion, and the first reflection portion, the second reflection portion, and the third reflection portion are arranged at positions having a different distance from the emission position of the optical fiber amplification unit 11. By the control unit 4 controlling the timing at which the pulse laser light is emitted from the light source 3 on the basis of the time difference corresponding to the optical distance difference among the first amplified light, the second amplified light, and the third amplified light generated due to the difference of the arrangement positions of the first reflection portion, the second reflection portion, and the third reflection portion, it is possible to change the degree of superposition among the first amplified light, the second amplified light, and the third amplified light at the time of emission from the optical distance adjustment unit 12.

According to the first embodiment described above, the following effects can be obtained.
(1) The light amplification apparatus 1 includes: the optical fiber amplification unit 11 and the optical distance adjustment unit 12. The optical fiber amplification unit 11 amplifies two pulse laser light (first pulse laser light, second pulse laser light) having at least a first wavelength λ₁ and a second wavelength λ₂ that are different from each other while propagating the two pulse laser light with a time difference τ and outputs first amplified light and second amplified light that are amplified light of the first pulse laser light and the second pulse laser light, respectively. The optical distance adjustment unit 12 differentiates optical distances at which the first amplified light and the second amplified light that are emitted from the optical fiber amplification unit 11 propagate and superimposes the first amplified light on the second amplified light. Thereby, by amplifying a plurality of pulse laser light having different wavelengths in a state of having the time difference τ in the single optical fiber amplification unit 11, it is possible to prevent the disturbance of spectrum and the generation of an unnecessary spectral component due to a non-linear optical process in the optical fiber amplification unit 11. As a result, the first amplified light and the second amplified light that have a high peak energy can be obtained. Further, a plurality of amplified light having a high peak energy in which the disturbance of spectrum and the generation of an unnecessary spectral component are prevented can be superimposed and output by the optical distance adjustment unit 12.
(2) The light amplification apparatus 1 includes the control unit 4 that controls the degree of superposition of the pulses of the first amplified light and the second amplified light that are emitted from the optical distance adjustment unit 12. Specifically, the control unit 4 controls the time difference τ between the pulses of the first pulse laser light from the first light source 301 and the second pulse laser light from the second light source 302. Thereby, the time difference generated by the first amplified light and the second amplified light propagating at a different optical distance difference in the optical distance adjustment unit 12 is cancelled, and it is possible to superimpose the first amplified light and the second amplified light on each other.
(3) The time difference τ is larger than pulse widths of the first pulse laser light from the first light source 301 and the second pulse laser light from the second light source 302. Thereby, the first pulse laser light and the second pulse laser light are not temporally superimposed and can be amplified without generating the non-linear interaction between the pulses in the optical fiber amplification unit 11.

### <Second embodiment>

A light amplification apparatus of a second embodiment will be described with reference to the drawings. In the following description, the same components as those of the first embodiment are given by the same reference numerals, and the differences are mainly described. Points which are not specifically described are similar to those of the first embodiment.

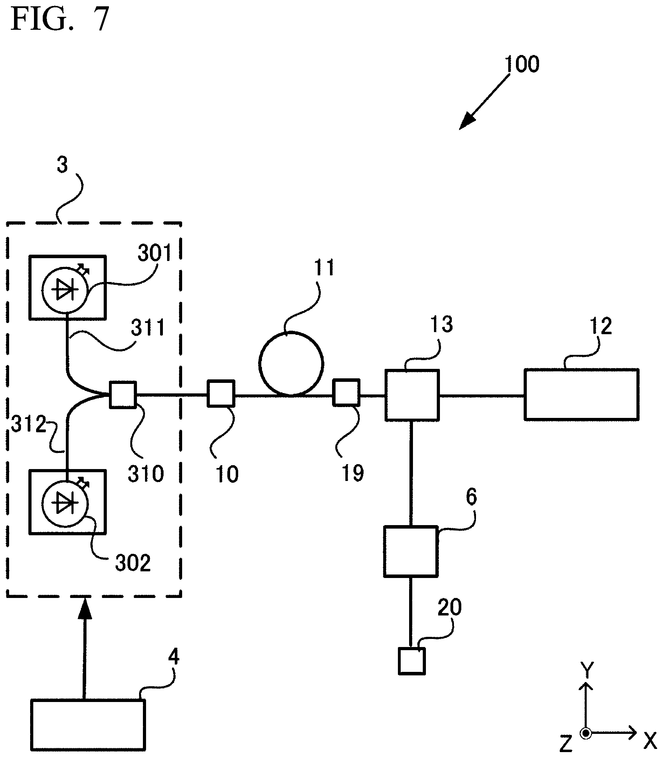

FIG. 7 is a block diagram schematically showing a main part configuration of a light amplification apparatus 100 of the second embodiment. In FIG. 7, an orthogonal coordinate system consisting of an X-axis, a Y-axis, and a Z-axis is set similarly to FIG. 1.

The light amplification apparatus 100 includes a wavelength conversion unit 6 in addition to the optical fiber amplification unit 11, the optical distance adjustment unit 12, the deflection element 13, the light source 3, and the control unit 4 that are included in the light amplification apparatus 1 of the first embodiment.

The wavelength conversion unit 6 is provided between the deflection element 13 and the output unit 20 and generates pulse laser light having a predetermined wavelength from the first amplified light and the second amplified light. The wavelength conversion unit 6 is formed of, for example, DAST (4-dimethylamino-N-methyl-4-stilbazoliumtosylate), which is an organic crystal, or a non-linear crystal such as LBO (LiB₃O₅, BBO (β-BaB₂O₄), CLBO (CsLiB₆O₁₀), or lithium niobate (LiNbO3). When the first amplified light and the second amplified light superimposed by the optical distance adjustment unit 12 as described in the first embodiment pass through the wavelength conversion unit 6, harmonic waves, a sum frequency, a difference frequency, or the like is generated due to a non-linear interaction, and wavelength conversion light that is pulse laser light having a wavelength different from the wavelengths of the first pulse laser light and the second pulse laser light from the light source 3 is generated. When the first amplified light and the second amplified light are not superimposed, the non-linear interaction does not occur at the wavelength conversion unit 6, and accordingly, wavelength conversion light is not generated.

The control unit 4 controls the degree of superposition between the first amplified light and the second amplified light that are emitted from the optical distance adjustment unit 12 by controlling the time difference between the emission of the first pulse laser light and the emission of the second pulse laser light as described in the first embodiment. The control unit 4 can control the output of the wavelength conversion light generated at the wavelength conversion unit 6 by performing the control described above. For example, the control unit 4 can control whether or not the wavelength conversion light is output by controlling the time difference between the emission of the first pulse laser light and the emission of the second pulse laser light.

Hereinafter, specific examples of the light amplification apparatus 100 of the second embodiment described above will be described.

### (Example 5)

Example 5, which is a first example of the light amplification apparatus 100 in the second embodiment, is described.

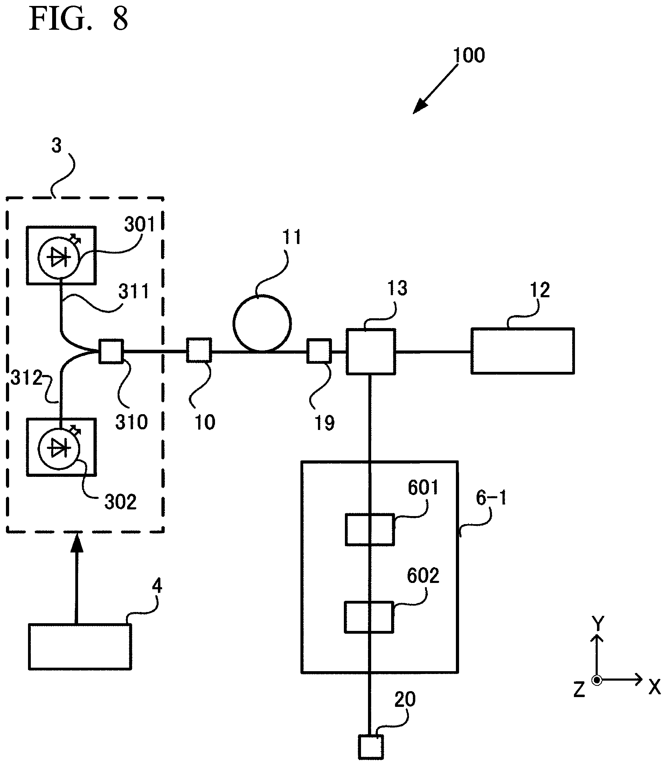

FIG. 8 is a block diagram schematically showing a main part configuration of the light amplification apparatus 100 of Example 5. The light amplification apparatus 100 of the first example includes an optical fiber amplification unit 11, an optical distance adjustment unit 12, a deflection element 13, a light source 3, a control unit 4, and a wavelength conversion unit 6-1.

The wavelength conversion unit 6-1 includes a first wavelength conversion unit 601 and a second wavelength conversion unit 602. The first wavelength conversion unit 601 is the non-linear crystal described above. The first wavelength conversion unit 601 satisfies a phase-matching condition for the second harmonic wave generation of the first amplified light having a first wavelength λ₁. The first wavelength conversion unit 601 does not satisfy a phase-matching condition for the second harmonic wave generation of the second amplified light having a second wavelength λ₂. Accordingly, among the first amplified light and the second amplified light that are incident on the first wavelength conversion unit 601, pulse laser light of the second harmonic wave (wavelength λ₁/2) of the first amplified light having the first wavelength λ₁ is generated.

The second wavelength conversion unit 602 is also the non-linear crystal described above. The second wavelength conversion unit 602 satisfies a phase-matching condition for the sum frequency generation between the second harmonic wave (wavelength λ₁/2) of the first amplified light and the second amplified light having the second wavelength λ₂. Thereby, when the second harmonic wave of the first amplified light and the second amplified light that are incident on the second wavelength conversion unit 602 are superimposed on each other, pulse laser light having a wavelength λ₃ (1/λ₃ = 2/λ₁ + 1/λ₂), which is the sum frequency between the wavelength λ₁/2 of the second harmonic wave of the first amplified light and the second wavelength λ₂ of the second amplified light, is generated.

When the second harmonic wave of the first amplified light and the second amplified light are not superimposed on each other, the second wavelength conversion unit 602 does not perform the non-linear interaction described above, and accordingly, the pulse laser light having the wavelength λ₃ is not generated. For example, the control unit 4 can control whether or not the pulse laser light having the wavelength λ₃ is generated by controlling the time difference between the emission of the first pulse laser light and the emission of the second pulse laser light.

### (Example 6)

Next, Example 6, which is a second example of the light amplification apparatus 100 of the second embodiment, is described.

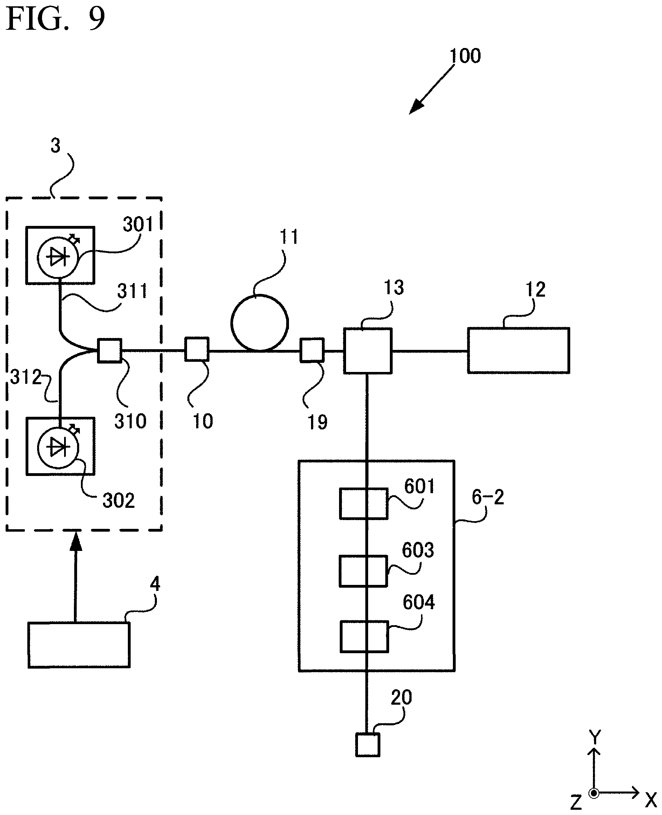

FIG. 9 is a block diagram schematically showing a main part configuration of the light amplification apparatus 100 of Example 6. The light amplification apparatus 100 of the second example includes an optical fiber amplification unit 11, an optical distance adjustment unit 12, a deflection element 13, a light source 3, a control unit 4, and a wavelength conversion unit 6-2.

The wavelength conversion unit 6-2 includes a first wavelength conversion unit 601, a third wavelength conversion unit 603, and a fourth wavelength conversion unit 604. The first wavelength conversion unit 601 is similar to that of the first example described above, satisfies a phase-matching condition for the second harmonic wave generation of the first amplified light having a first wavelength λ₁, and generates the second harmonic wave (wavelength λ₁/2). The third wavelength conversion unit 603 is a non-linear crystal, satisfies a phase-matching condition for the second harmonic wave generation of the second amplified light having a second wavelength λ₂, and generates a second harmonic wave (wavelength λ₂/2). The fourth wavelength conversion unit 604 is a non-linear crystal, and a phase-matching condition for generating the sum frequency between the second harmonic wave (wavelength λ₁/2) of the first amplified light and the second harmonic wave (wavelength λ₂/2) of the second amplified light is satisfied.
Here, the wavelength λ₄ of the sum frequency is given by λ₄ = 2/λ₁ + 2/λ₂. For example, when the first wavelength λ₁ is 1060 nm and the second wavelength λ₂ is 1068 nm, wavelength conversion light having a wavelength of 266 nm is generated.

Accordingly, when the first amplified light and the second amplified light are superimposed on each other, the wavelength conversion unit generates light having a wavelength λ₄. On the other hand, when the first amplified light and the second amplified light are not superimposed on each other, light having the above wavelength is not generated.

For example, the control unit 4 can control whether or not the light having the wavelength λ₄ is generated by controlling the time difference between the emission of the first pulse laser light and the emission of the second pulse laser light.

According to the second embodiment described above, the following effects can be obtained.

The light amplification apparatus 100 includes the wavelength conversion unit 6 that generates pulse laser light having a predetermined wavelength from the first amplified light and the second amplified light. By the control unit 4 of the light amplification apparatus 100 controlling the time difference between the emission of the first pulse laser light and the emission of the second pulse laser light, the degree of superposition between the pulses of the first amplified light and the second amplified light is controlled, and the output of the pulse laser light is controlled. Thereby, it is possible to output wavelength conversion light in which the disturbance of spectrum due to the non-linear interaction of the pulse laser light in the optical fiber amplification unit 11 is prevented. The control unit 4 can control whether or not the wavelength conversion light is output by controlling the time difference between the emission of the first pulse laser light and the emission of the second pulse laser light.

Although various embodiments and modification examples have been described above, the present invention is not limited to these. Other embodiments conceivable within the scope of the technical idea of the present invention are also included in the scope of the present invention.

### DESCRIPTION OF THE REFERENCE SYMBOLS

100 Light amplification apparatus
3 Light source
4 Control unit
6, 6-1, 6-2 Wavelength conversion unit
11 Optical fiber amplification unit
12, 12-1, 12-2, 12-3, 12-4 Optical distance adjustment unit
13, 13-1, 13-4 Deflection element
14 Polarization state adjustment element
121, 221, 321 First reflection portion
122, 222, 322, Second reflection portion
421 First grating
422 Second grating
423 Reflection portion
601 First wavelength conversion unit
602 Second wavelength conversion unit
603 Third wavelength conversion unit
604 Fourth wavelength conversion unit

## Claims

1. A light amplification apparatus, comprising:
an optical fiber amplification unit that amplifies two pulse laser light having at least a first wavelength λ₁ and a second wavelength λ₂ that are different from each other while propagating the two pulse laser light with a time difference and outputs first amplified light and second amplified light that are amplified light of the pulse laser light; and
an optical distance adjustment unit that differentiates optical distances at which the first amplified light and the second amplified light that are emitted from the optical fiber amplification unit propagate and superimposes the first amplified light and the second amplified light on each other.

2. The light amplification apparatus according to claim 1, comprising:
a deflection element that is provided between the optical fiber amplification unit and the optical distance adjustment unit and changes propagation directions of the first amplified light and the second amplified light from the optical distance adjustment unit.

3. The light amplification apparatus according to claim 1 or 2,
wherein the optical distance adjustment unit comprises a first reflection portion and a second reflection portion that reflect the first amplified light and the second amplified light, respectively, at positions having a different distance from each other from an emission position of the optical fiber amplification unit.

4. The light amplification apparatus according to claim 3,
wherein at least one of the first reflection portion and the second reflection portion is any one of a narrow band reflection mirror, a short-pass mirror, and a long-pass mirror that reflects the first amplified light and the second amplified light.

5. The light amplification apparatus according to claim 3,
wherein the first reflection portion and the second reflection portion are volumetric holographic diffraction gratings that reflect the first amplified light and the second amplified light, respectively.

6. The light amplification apparatus according to claim 3,
wherein the first reflection portion and second reflection portion are fiber Bragg grating elements that reflect the first amplified light and the second amplified light, respectively.

7. The light amplification apparatus according to any one of claim 3 that depends from claim 2 and claims 4 to 6,
wherein the first amplified light and the second amplified light are linearly polarized and have an identical electric field oscillation direction,
the deflection element is a polarization beam splitter, and
a polarization state adjustment element that rotates the electric field oscillation direction by 90° in reciprocation is further provided between the deflection element and the optical distance adjustment unit.

8. The light amplification apparatus according to claim 7,
wherein the polarization state adjustment element is a quarter-wave plate or a 45 degree Faraday rotator.

9. The light amplification apparatus according to claim 2,
wherein the optical distance adjustment unit comprises a first grating, a second grating, and a fourth reflection portion,
the fourth reflection portion is a roof mirror which shifts incident light in a direction perpendicular to a dispersion direction of the grating and in which reflection light is parallel to the incident light,
the first grating causes the incident first amplified light and the incident second amplified light to be deflected at different angles and be emitted toward the second grating,
the second grating causes the deflected first amplified light and the deflected second amplified light to be parallel and be emitted toward the fourth reflection portion,
the fourth reflection portion reflects the first amplified light and the second amplified light in a direction parallel to an incidence direction,
the second grating emits the first amplified light and the second amplified light from the fourth reflection portion toward the first grating,
the first grating emits the first amplified light and the second amplified light from the second grating toward the deflection element, and
the deflection element reflects the first amplified light and the second amplified light from the first grating.

10. The light amplification apparatus according to any one of claims 1 to 9, further comprising:
a first light source that outputs the pulse laser light having the first wavelength λ₁; and a second light source that outputs the pulse laser light having the second wavelength λ₂.

11. The light amplification apparatus according to any one of claims 1 to 10, further comprising:
a control unit that controls a degree of superposition of pulses of the first amplified light and the second amplified light that are emitted from the optical distance adjustment unit.

12. The light amplification apparatus according to claim 11 that depends from claim 10,
wherein the control unit controls a time difference between pulses of the pulse laser light from the first light source and the pulse laser light from the second light source.

13. The light amplification apparatus according to claim 12,
wherein the time difference is larger than pulse widths of the pulse laser light from the first light source and the pulse laser light from the second light source.

14. The light amplification apparatus according to any one of claims 11 to 13, further comprising:
a wavelength conversion unit that generates pulse laser light having a predetermined wavelength from the first amplified light and the second amplified light,
wherein the control unit controls an output of the pulse laser light by controlling a degree of superposition of pulses of the first amplified light and the second amplified light.

15. The light amplification apparatus according to claim 14,
wherein the wavelength conversion unit comprises: a first wavelength conversion unit that satisfies a phase-matching condition only for second harmonic wave generation of the first amplified light having the first wavelength λ₁; and a second wavelength conversion unit that satisfies a phase-matching condition for sum frequency generation between a second harmonic wave of the first amplified light having the first wavelength λ₁ and the second amplified light having the second wavelength λ₂.

16. The light amplification apparatus according to claim 14,
wherein the wavelength conversion unit comprises: a first wavelength conversion unit that satisfies a phase-matching condition for second harmonic wave generation of the first amplified light having the first wavelength λ₁; a third wavelength conversion unit that satisfies a phase-matching condition for second harmonic wave generation of the second amplified light having the second wavelength λ₂; and a fourth wavelength conversion unit that generates a sum frequency between a second harmonic wave of the first amplified light having the first wavelength λ₁ and a second harmonic wave of the second amplified light having the second wavelength λ₂.

17. An optical amplification method, comprising:
using the light amplification apparatus according to any one of claims 10 to 16; and
controlling a time difference between pulses of the pulse laser light from the first light source and the pulse laser light from the second light source, and controlling a degree of superposition between pulse laser light of the first amplified light and the second amplified light that are output from the output unit.

18. A light amplification method, comprising:
amplifying two pulse laser light having at least a first wavelength λ₁ and a second wavelength λ₂ that are different from each other while propagating the two pulse laser light with a time difference and outputting first amplified light and second amplified light that are amplified light of each of the pulse laser light; and
differentiating optical distances at which the first amplified light and the second amplified light propagate and superimposing the first amplified light and the second amplified light on each other.
